# EUROPEAN PATENT SPECIFICATION

(11) **EP 1 689 897 B1**
(45) Date of publication and mention of the grant of the patent: **09.05.2007**
(21) Application number: 04787135.5
(22) Date of filing: 13.09.2004
(51) Int. Cl.: C22C 19/05, B23K 35/30, B23K 1/00

(54) **BRAZE ALLOY AND THE USE OF SAID BRAZE ALLOY**
LEGIERUNG ZUM LÖTEN UND DEREN VERWENDUNG
ALLIAGE DE BRASAGE ET UTILISATION D'UN TEL ALLIAGE DE BRASAGE

(30) Priority: 24.09.2003 EP 03103523
(43) Date of publication of application: 16.08.2006
(73) Proprietor: Alstom Technology Ltd, 5400 Baden (CH)
(72) Inventor: SCHNELL, Alexander, Dr., 5400 Baden (CH); MORGAN, Erol, 5406 Rütihof (CH); STANKOWSKI, Alexander, Dr., 5301 Siggenthal - Station (CH)
(86) International application number: PCT/EP2004/052155
(87) International publication number: WO 2005/028690

(56) References cited:
- EP-A- 0 520 464
- EP-A- 1 201 778
- EP-A- 1 258 545
- US-A- 3 807 993
- US-A- 5 043 138
- US-A- 5 240 491
- US-A- 5 437 373
- US-A- 5 783 318
- PATENT ABSTRACTS OF JAPAN vol. 1999, no. 03, 31 March 1999 (1999-03-31) & JP 10 330872 A (TOSHIBA CORP), 15 December 1998 (1998-12-15)
- PATENT ABSTRACTS OF JAPAN vol. 013, no. 365 (M-859), 15 August 1989 (1989-08-15) & JP 01 121645 A (MATSUSHITA REFRIG CO LTD), 15 May 1989 (1989-05-15)
- PATENT ABSTRACTS OF JAPAN vol. 1999, no. 01, 29 January 1999 (1999-01-29) & JP 10 273748 A (HITACHI METALS LTD;HITACHI LTD), 13 October 1998 (1998-10-13)

## Description

### TECHNICAL FIELD

The invention relates to an oxidation and corrosion resistant braze alloy according to claim 1, to a use of the said braze alloy, to a pre-sintered braze sheet, braze tape, foil or a paste according to claim 6 and to a method of repairing a Nickel based or a Cobalt based superalloy article.

### STATE OF THE ART

The wide use of Nickel and Cobalt based superalloys allowed an increased turbine inlet temperature, which significantly helped to increase the turbine efficiency. Specially tailored superalloys were developed in order to make maximum use of material strength and temperature capability. Superalloys are cast in the polycrystalline (EQ), the directionally solidified (DS) and the single crystalline (SX) form. During operation of turbine components under high temperature conditions, various types of damages can occur. For example, cracks can result from thermal cycling, mechanical load and foreign object impact. Additionally, cracks and inclusions may be incurred during manufacture. Furthermore, environmental attacks such as oxidation and corrosion can lead to local erosion and wall-thickness reduction of the components. Because the costs of turbine components made of Nickel based or Cobalt based superalloys are very high, it is desirable to repair these components rather than to replace them. Especially Nickel based superalloy components cast in a DS or SX form are very cost intensive.

The following state of the art methods for repairing high temperature superalloys are generally known: EP-A1-1 258 545 discloses a method of isothermally brazing single crystal components with the full retention of the single crystalline microstructure in the brazed joint. US-A-5,732,467 discloses a method of repairing cracks on the outermost surface of an article having a directionally oriented microstructure and a superalloy composition. The repairing is done by coating the cleaned crack surface with a material featuring the same material composition as said article. Thereby the coated crack surface is subjected to an elevated temperature and isostatic pressure over a period of time sufficient to repair the crack surface without changing the crystalline microstructure of the parent article.

Additionally, a number of alternative brazing methods for repairing cracks or wide gaps in turbine components made of a Cobalt and a Nickel based superalloy, are known such as US-A-5,666,643, US-A-4,381,944 or US-A-5,437,737. The braze material product is a blend of two powders, the low melting brazing powder and a parent superalloy powder as an additional filler material.

US 4,830,934 discloses a braze alloy powder mixture consisting of at least three distinct groups of alloy powders which together define a mixture composition which results in a significant improvement in strength and oxidation resistance over conventional braze alloy powders or mixtures.

Standard and commercially available braze powders, braze alloy blends and mixtures used for crack brazing comprise of a chemical composition which mainly aims for a high tensile strength. Furthermore the sufficient flow of the braze alloy during brazing is of particular interest so that the total wetting and filling of the cracks is guaranteed. The level of the melting point depressing elements (such as B or Si) must be balanced between a minimum level for a sufficient braze flow on one side, against a reasonable isothermal brazing time on the other side. The addition of heavy and refractory elements such as Cr, W and Ta, which guarantee the strength of the brazed area, are known to result in a more sluggish flowing braze alloy.

In most cases the braze-repaired gas turbine blading components undergo an re-coating process. This means that the braze-repaired cracks or the wall thickness braze-repaired airfoils are protected against the hot gas stream by the oxidation and corrosion resistant coating. Therefore the oxidation and corrosion resistance of the brazed areas itself is of less interest as the braze-repaired areas are protected by an overlay coating. Nevertheless, in some cases it is of interest to restore worn blading components at location where a re-coating process is not desired or where a local re-coating process is not applicable. In such cases a high oxidation and corrosion resistance of the brazed area, such as brazed joint or brazed tapes and pre-sintered braze sheets, is required.

Standard braze materials are alloyed in a way so that the resulting braze area suffers from internal oxidation at elevated temperatures. Such an internal oxidation leads to an undesired material loss with proceeding time. Internal oxidation occurs due to the fact that the pure braze material or the braze mixture/blend used do not form a dense and stable oxide scale at the outer surface.

The content of the heavy and refractory elements in the braze alloy such as Cr, Ta, W must be balanced in order to guarantee a dense oxide scale at elevated temperatures. Especially the ratio of the Aluminium to the Chromium content is known to have a significant influence on the oxide scale formation of the material and hence on the oxidation resistance. The consideration of a balanced Al/Cr content for optimum oxidation resistance applies for the usage of the pure braze alloy for crack brazing as well as for the usage in mixtures of a two-component braze powder blend. For blended tapes and/or blended pre-sintered braze sheet materials the overall nominal chemical composition resulting from the mixture of both powders must be balanced. Especially the formation of Chromium rich borides in the braze-repaired tapes and sheets, which result in a local Cr-depletion in the matrix around theses Cr-rich particles, must be considered when tailoring a oxidation resistant braze tape or sheet.

A Nickel based repair alloy is described in US 5,783,318 comprising 0.03 to 2.5 wt.-% Hf, 0.003 to 0.32 wt.-% B, 0.007 to 0.35 wt.-% Zr and 0.02 to 0.16 wt.-% Y. The control of the Yttrium is particularly important. It is disclosed in US 5,783,318 that less than 0.02 % Y do not impart a sufficient degree of oxidation resistance and more than 0.16 wt.-% Y do not improve oxidation resistance, but introduce undesirable characteristics, such as precipitation of yttride phases and changes in melting properties.

### SUMMARY OF INVENTION

It is aim of the present invention to develop an oxidation and corrosion resistant braze alloy for the braze repair of polycrystalline or directionally solidified or single crystalline Nickel based or Cobalt based superalloy articles used in gas turbine industry. It is further the aim to produce the said oxidation and corrosion resistant braze alloy in the form of pure paste or foil or blended pastes, blended braze-tapes (green material) and pre-sintered braze sheets which are composed of a variable mixture of the new oxidation and corrosion resistant pure braze alloy and a parent superalloy filler with enhanced oxidation resistance. As well, it is the aim of the present invention to find a method of repairing a gas turbine component by means of brazing with the inventive braze alloy paste, foil, braze tapes or the pre-sintered braze sheets.

This objective is solved by a Nickel based braze alloy comprising (wt.-%) 10-15% Cr, 4.5-6% Al, 0.17-0.3% Y, 8-12% Co, 0-4% W, 2.5-5% Ta, 2.0-3.5% B with Cr+Al > 15%, Cr/Al ≤ 3 and Al + Ta > 7.5%, remainder Nickel and unavoidable impurities.

According to the present invention the inventive braze alloy can either be used in pure form as a paste or a foil or as a blend paste, as a braze tape or as a pre-sintered braze sheet. The pre-sintered braze sheet or braze tape or blend paste comprises a mixture of filler material consisting of a nickel or cobalt superalloy and the braze alloy with at least 30 wt.-% braze alloy.

The braze alloy, the braze tapes and the pre-sintered braze sheets can be used in a braze repair-method, e.g. for crack repair or wall thickness build up of ex-service gas turbine component in need of repair.

### SHORT SUMMARY OF DRAWINGS

The invention is illustrated by the accompanying drawings, in which
- **Fig. 1**: shows as an example a gas turbine blade,
- **Fig. 2**: shows the oxidation attack of a standard pre-sintered braze sheets material at 950°C after 1000h and
- **Fig. 3, 4**: shows the oxidation attack of the modified the pre-sintered braze sheets material at 950°C after 1600h.

The drawing shows only parts important for the invention.

### PREFERRED EMBODIMENT OF THE INVENTION

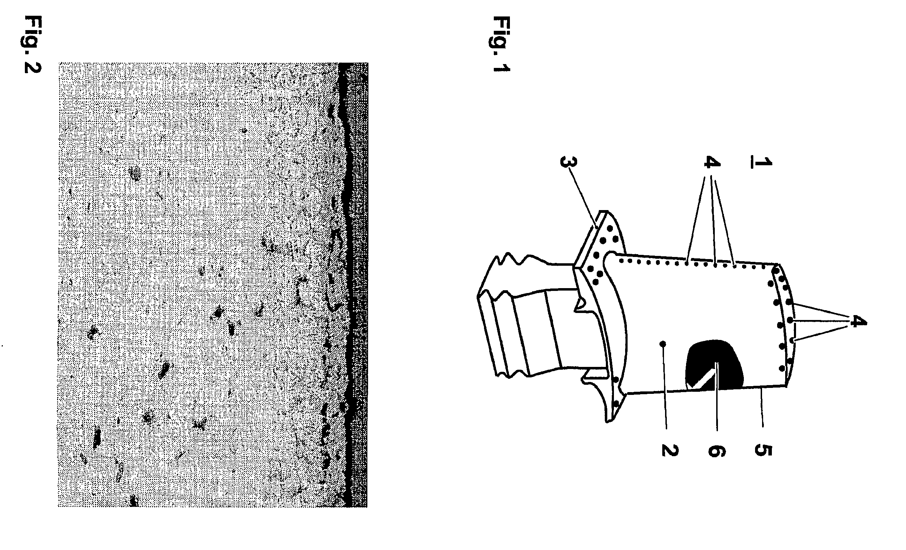

The invention relates to a braze alloy composition resulting in an enhanced high temperature oxidation resistance of the brazed areas, the use of the inventive braze alloy in pure form as a paste or as a foil or as a blend braze paste, as a braze tape or as a pre-sintered braze sheet and to a method of repairing cracks or gaps or for wall thickness and geometry restoration for example in or of a single crystal article made of a Nickel base superalloy by means of brazing using either the inventive braze alloy in pure form as a paste or a foil or as a blend paste, as a braze tape or as a pre-sintered braze sheet. Nickel base superalloys are known in the state of the art, e.g. from the document US-A-5,888,451, US-A-5,759,301 or from US-A-4,643,782, which is known as "CMSX-4". The single crystal article could possibly be a part of a gas turbine such as a blade and vane or a part of the burner chamber of the gas turbine. Fig. 1 shows as an example such an article 1 as blades or vanes comprising a blade 2 against which hot combustion gases are directed during operation of the gas turbine engine, a cavity, not visible in Fig. 1, and cooling holes 4, which are on the external surface 5 of the component 1 as well as on the platform 3 of the component. Through the cooling holes 4 cooling air is ducted during operation of the engine to cool the external surface 5. The external surface 5 is subjected to severe attack by oxidation, corrosion and erosion due to the intersection with hot combustion gases. In principle, the article 1 can be of equiaxed conventionally cast or directionally solidified (DS) or single crystal (SX) structure. While the advantage of this invention is described with reference to a turbine blade or vane as shown in Fig. 1, the invention is generally applicable to any component which is in need of repair by means of high temperature brazing. During service the article is subjected to the hot environment of the gas turbine which leads to the deleterious effect of cracks, gap or wall thickness erosion in the surface of the article. One aim of the present invention is to find an oxidation and corrosion resistant pre-sintered braze sheet or braze tape for example for the restoration of the wall thickness of such ex service hot gas path articles 1 of a land based gas turbine. The pre-sintered braze sheets are made of the braze tapes through sintering which are composed of a variable mixture of braze alloy, filler pow der and binder through executing appropriate thermal pre-sintering cycles. The pre-sintered braze sheets (PSP) are free of binder and shall exhibit a very low grade of porosity. Pre-sintered braze sheets and related products are a sintered blend of braze alloy and superalloy powders available in various compositions, sizes and shapes.

Before applying the method of brazing as described below, a protective coating such as a layer of MCrAlY (6) or a thermal barrier coating (TBC) - not visible in Fig. 1- has to be removed from the article 1 by a process such as acid stripping, grit blasting or mechanical grinding or a combination thereof. At the same time this method also cleans the surface of the parent material from unwanted oxide layers. In addition, the surface of the crack or gap may be cleaned from oxides by a dynamic Fluoride-Ion-Cleaning (FIC) process, which is widely known in state of the art. The FIC process removes oxide layers composed of the stable Al₂O₃, Cr₂O₃ etc. oxides and depletes Al and Cr from the surface, thereby improving the braze flow and the repair of the cracked components. The process subjects the oxidized (and sulphidized) components to a highly fluorising and reducing gaseous atmosphere of hydrogen and hydrogen fluoride at high temperatures, which may vary from 900°C to 1000°C. Such FIC-processes are disclosed, for example, in EP-B1-34041, US-4,188,237, US-5,728,227 or in US-5,071,486. After successful completion of the brazing repair with braze paste or foil and/or braze tape or Pre-sintered Braze Sheets according the invention and subsequent to geometry re-contouring, the component will be re-coated.

In order to braze-repair cracked turbine parts the crack is filled with pastes made of the said braze alloy and a variable superalloy filler content. Alternatively a pure braze paste is used. The crack or gap has a maximum width of 1000 µm. The braze paste will be applied into and over the crack or gap before applying a high temperature vacuum heat treatment. Another possibility is to apply a blended pre-sintered braze sheet or blended braze tape or a foil on the part to be repaired. The table 1 shows 3 examples for the chemical composition of several braze alloys used for experimental studies.

**Tab. 1**

| Chemical Composition of braze-alloy (wt.-%) | | | | | | | |
|---|---|---|---|---|---|---|---|
| Braze Alloy | Ni | Co | Cr | Al | Ta | B | Y |
| 1 | bal. | 10 | 15 | 5.5 | 3.0 | 2.5 | 0.17 |
| 2 | bal. | 10 | 15 | 5 | 3.5 | 2.5 | 0.3 |
| 3 | bal. | 10 | 10 | 5.5 | 3.0 | 2.5 | 0.17 |

In order to improve the oxidation and corrosion resistance of standard available pre-sintered braze sheets, the chemical composition of the currently used and commercially available pure braze alloy has been modified. The aluminum content of the braze alloy has been increased to a range of between 4.5 to 6 wt.% in order to guarantee an overall aluminum content in the matrix phase of the brazed pre-sintered sheet of about 5 wt.-%. For a sufficient oxidation and corrosion resistance the γ-matrix must contain a minimum of 12 wt.-% Cr. The Cr-rich borides (with a fraction of 10-13 vol.-%), which are formed in the pre-sintered braze sheet, tape or blended paste material act as an additional Cr-reservoir to the material.

The overall Cr content in the pre-sintered braze sheet, tape, foil or paste material should not be lower than 10 wt-%. The presence of 10-15 wt.-% Chromium in the braze alloy decreases the minimum required Aluminium content, which is necessary for the formation of dense and stable Al oxide scale. The Al/Cr ratio in a Nickel based alloy determines the oxidation mechanism. To form a stable oxide layer at lower temperatures an Al content of at least 4.5 wt % is required. The sum of the Cr and Al content has to be more than 15 wt.-% and the ratio of Cr/Al has to be not more than 3.

Yttrium has also been added in amounts from 0.17 to 0.3 wt% to the pure braze alloy in order to improve the adhesion of the surface oxide scale on top of the braze paste, tape, foil or sheet-material. The Yttrium oxides mainly sit at the grain boundaries in the outer Al and Cr oxide scale as the solubility of Yttrium within Cr-Al oxides is very low. The Yttria slows down diffusion along the grain boundaries, which results in an inward growth of the oxide. An inward oxidation avoids the formation of voids at the base material/oxide scale interface as no elements from the base material diffuse into the oxide. The stresses during oxide scale growth are therefore reduced and the oxide scale is less prone to spallation. It was an unexpected effect that the relative high content of Y (0,17-0,30 wt.-%) has a positive influence on the oxidation properties.

Boron has a strong influence on lowering the melting point of braze alloys. Boron depresses the melting point significantly under 1200°C.

In general, elements such as Boron, Silicon, Hafnium, Zirconium can be used as Melting Point Depressant (MPD), but Boron is the favorable candidate to be used as the Melting Point Depressant, very little Boron (approx. 2.5 wt.-% boron) is needed to significantly depress the melting point of superalloys.

Chromium together with Aluminum in the braze alloy results in a good oxidation resistance of the braze-repaired area. Chromium as a strong solid solution hardening element increases the strength of the braze alloy.

The stability of the γ/γ'-microstructure is strongly dependent on the Aluminum and Tantalum content. Ta stabilizes the gamma prime at elevated temperatures. An increasing Ta content shifts the gamma prime solvus line to higher temperatures. It is possible to design the microstructure of the brazed joint after the brazing cycle, which means without any MPD Boron by considering the sum of the Al and Ta content. Thus, the sum of Al and Ta should be at least 7.5 wt.-%

From the above mentioned braze alloys according to Tab. 1, two batches of a pre-sintered braze sheet, using standard superalloys in powder form as the filler material, have been produced. The pre-sintered braze sheets are made of the braze tapes which are composed of a mixture of at least 30 wt.-% of braze alloy and residual % filler powder through executing appropriate thermal pre-sintering cycles. The pre-sintered sheets are free of binder and shall exhibit a very low grade of porosity.

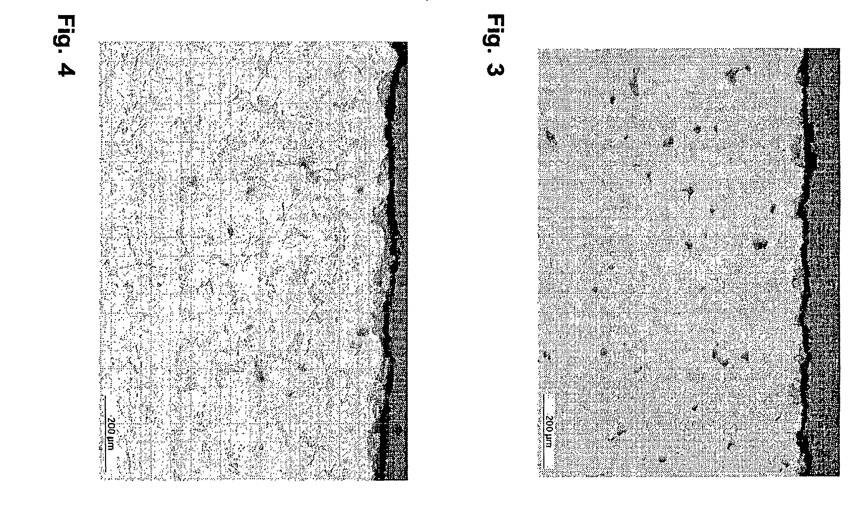

Corresponding modified pre-sintered braze sheets have been long-term exposed at 950°C for 1000h and 1600 h. Fig. 2 shows as a reference the microstructure after long-term exposure of a standard braze-sheet. Fig. 3 and 4 show in contrast the oxidation attack on the different modified braze sheet materials.

All new modified PSP material do not show any measurable internal oxidation attack compared to the currently commercially available ones. It is assumed that the increased Aluminium content in combination with the balanced Cr/Al ratio in the matrix of the pre-sintered braze sheet material guarantees a stable and dense oxide scale. After 1600h at 950°C accurate metallographical investigations showed that the batch with the new inventive braze alloy No. 1 (see Table 1) has been measured to show the lowest oxidation attack.

The excellent oxidation properties are also related to the homogeneous microstructure of the new pre-sintered braze sheets which comprises of a γ/γ'-matrix and two types of borides and carbides, a Cr-rich boride and a Cr-, Mo-, W-rich boride/carbide phase. The Cr, Al and Y content in the γ/γ'-matrix is sufficiently high and the ratio between the Cr and Al content is balanced in order to form a stable and dense oxide layer at the braze repaired surface. The physical properties of the PSP material such as the Young's modulus and the coefficient of thermal expansion (CTE) versus temperatures mainly determine the residual stresses at the PSP/parent metal interface. Therefore, the physical properties are desired to match well with the parent material. The Young's Modulus and the CTE have been measured for the newly modified pre-sintered braze sheets. Several sheets have been brazed on top of each other and subsequently test specimens have been taken for tensile tests and CTE measurements. The outcome of the tests showed that the Young's Modulus and the CTE as a function of temperature is in the same order of magnitude with most of the commonly and widely used Nickel based superalloys.

While the present invention has been described by an example, it is apparent that one skilled in the art could adopt other forms. Accordingly, the scope of our invention is to be limited only by the attached claims.

### REFERENCE NUMBERS

- 1: Article
- 2: Blade
- 3: Platform
- 4: Cooling holes
- 5: External surface of article 1
- 6: Layer of MCrAlY

## Claims

1. A braze alloy consisting of (wt.-%) 10-15% Cr, 4.5-6% Al, 0.17-0.3% Y, 8-12% Co, 0-4% W, 2.5-5% Ta, 2.0-3.5% B with Cr+Al > 15%, Cr/Al ≤ 3 and Al+Ta > 7.5 %, remainder Nickel and unavoidable impurities.

2. The use of the braze alloy according to claim 1 for brazing onto a Nickel based or a Cobalt based polycrystalline superalloy article.

3. The use of the braze alloy according to claim 1 for brazing onto a Nickel based or a Cobalt based directionally solidified superalloy article.

4. The use of the braze alloy according to claim 1 for brazing onto a Nickel-based or a Cobalt based single crystal superalloy article.

5. The use of the braze alloy according to one of claims 2, 3, and 4 wherein the superalloy article is a gas turbine component.

6. The use of the braze alloy according to claim 1 in the pure form as a paste or a foil or as a blend in a blend braze paste, as a braze tape or as a pre-sintered braze sheet.

7. A pre-sintered braze sheet, braze tape or blend braze paste comprising a mixture of filler material consisting of a nickel or cobalt superalloy and the braze alloy according to claim 1.

8. The pre-sintered braze sheet, braze tape or blend braze paste according to claim 7, wherein the mixture comprises at least 30 wt.-% braze alloy.

9. The pre-sintered braze sheet, braze tape or blend braze paste according to claim 7 or 8, wherein the accordingly produced pre-sintered braze sheet contain no binder.

10. A method of repairing a nickel-based or a cobalt-based superalloy article (1) comprising the step of high temperature vacuum brazing of the article (1) with the pure braze alloy according to claim 1 as a paste or a foil.

11. A method of repairing a nickel-based or a cobalt-based superalloy article (1) comprising the step of brazing the article (1) with a pre-sintered braze sheet, braze tape or blend braze paste according to claim 7.

## Patentansprüche

1. Hartlotlegierung, die aus (in Gew.-%) 10-15% Cr, 4,5-6% Al, 0,17-0,3% Y, 8-12% Co, 0-4% W, 2,5-5% Ta, 2,0-3,5% B besteht, wobei Cr+Al > 15%, Cr/Al ≤ 3 und Al+Ta > 7,5%, Rest Nickel und unvermeidliche Verunreinigungen.

2. Verwenden der Hartlotlegierung nach Anspruch 1 zum Hartlöten auf einen Gegenstand aus polykristalliner Superlegierung auf Nickelbasis oder Kobaltbasis.

3. Verwenden der Hartlotlegierung nach Anspruch 1 zum Hartlöten auf einen Gegenstand aus gerichtet erstarrter Superlegierung auf Nickelbasis oder Kobaltbasis.

4. Verwenden der Hartlotlegierung nach Anspruch 1 zum Hartlöten auf einen Gegenstand aus einkristalliner Superlegierung auf Nickelbasis oder Kobaltbasis.

5. Verwendung der Hartlotlegierung nach einem der Ansprüche 2, 3 und 4, wobei der Gegenstand aus Superlegierung eine Gasturbinenkomponente ist.

6. Verwenden der Hartlotlegierung nach Anspruch 1 in der reinen Form als Paste oder Folie oder als eine Mischung in einer Mischungshartlotpaste, als ein Hartlotband oder als eine vorgesinterte Hartlotplatte.

7. Vorgesinterte Hartlotplatte, vorgesintertes Hartlotband oder vorgesinterte Mischungshartlotpaste, umfassend ein Gemisch aus Füllmaterial, bestehend aus einer Nickel- oder Kobaltsuperlegierung und der Hartlotlegierung nach Anspruch 1.

8. Vorgesinterte Hartlotplatte, vorgesintertes Hartlotband oder vorgesinterte Mischungshartlotpaste nach Anspruch 7, wobei das Gemisch mindestens 30 Gew.-% Hartlotlegierung umfaßt.

9. Vorgesinterte Hartlotplatte, vorgesintertes Hartlotband oder vorgesinterte Mischungshartlotpaste nach Anspruch 7 oder 8, wobei die entsprechend vorgesinterte Hartlotplatte kein Bindemittel enthält.

10. Verfahren zum Reparieren eines Gegenstands (1) aus einer Superlegierung auf Nickelbasis oder Kobaltbasis, umfassend den Schritt des Hochtemperaturvakuumhartlötens des Gegenstands (1) mit der reinen Hartlotlegierung nach Anspruch 1 als Paste oder Folie.

11. Verfahren zum Reparieren eines Gegenstands (1) aus einer Superlegierung auf Nickelbasis oder Kobaltbasis, umfassend den Schritt des Hartlötens des Gegenstands (1) mit einer vorgesinterten Hartlötplatte, einem vorgesinterten Hartlotband oder einer Mischhartlotpaste nach Anspruch 7.

## Revendications

1. Alliage de brasage constitué en pourcentage pondéral de : 10 à 15 % Cr, 4,5 à 6 % Al, 0,17 à 0,3 % Y, 8 à 12 % Co, 0 à 4 % W, 2,5 à 5 % Ta, 2,0 à 3,5 % B avec Cr+Al > 15 %, Cr/Al ≤ 3 et Al+Ta > 7,5 %, le reste étant du nickel et des impuretés inévitables.

2. Utilisation de l'alliage de brasage selon la revendication 1 pour le brasage sur un article en superalliage polycristallin à base de nickel ou de cobalt.

3. Utilisation de l'alliage de brasage selon la revendication 1 pour le brasage sur un article en superalliage à base de nickel ou de cobalt obtenu par solidification directionnelle.

4. Utilisation de l'alliage de brasage selon la revendication 1 pour le brasage sur un article en superalliage monocristallin à base de nickel ou de cobalt.

5. Utilisation de l'alliage de brasage selon l'une des revendications 2, 3 et 4, l'article en superalliage étant un composant de turbine à gaz.

6. Utilisation de l'alliage de brasage selon la revendication 1 à l'état pur sous forme de pâte ou de film ou sous forme de mélange dans une pâte de brasage mélangée, de ruban de brasage ou de feuille de brasage préalablement frittée.

7. Feuille de brasage préalablement frittée, ruban de brasage ou pâte de brasage mélangée comportant un mélange de matériau de remplissage constitué d'un superalliage de nickel ou de cobalt et de l'alliage de brasage selon la revendication 1.

8. Feuille de brasage préalablement frittée, ruban de brasage ou pâte de brasage mélangée selon la revendication 7, le mélange comportant au moins 30 % en poids d'alliage de brasage.

9. Feuille de brasage préalablement frittée, ruban de brasage ou pâte de brasage mélangée selon la revendication 7 or 8, la feuille de brasage préalablement frittée ainsi produite ne contenant aucun liant.

10. Procédé de réparation d'un article (1) en superalliage à base de nickel ou de cobalt, comportant l'étape consistant à braser l'article (1) à haute température sous vide avec l'alliage de brasage pur selon la revendication 1 sous forme de pâte ou de film.

11. Procédé de réparation d'un article (1) en superalliage à base de nickel ou de cobalt, comportant l'étape consistant à braser l'article (1) avec une feuille de brasage préalablement frittée, un ruban de brasage ou une pâte de brasage mélangée selon la revendication 7.
